# EUROPÄISCHE PATENTSCHRIFT

(11) **EP 2 782 766 B1**
(45) Veröffentlichungstag und Bekanntmachung des Hinweises auf die Patenterteilung: **07.08.2019**
(21) Anmeldenummer: 12783563.5
(22) Anmeldetag: 30.10.2012
(51) Int. Cl.: B60H 1/00, B61D 27/00

(54) **PASSAGIERSCHIENENFAHRZEUG MIT AKTIVER WÄRMEDÄMMUNG**
PASSENGER RAIL VEHICLE WITH ACTIVE THERMAL INSULATION
VÉHICULE FERROVIAIRE DE PASSAGERS À ISOLATION THERMIQUE ACTIVE

(30) Priorität: 21.11.2011 AT 17222011
(43) Veröffentlichungstag der Anmeldung: 01.10.2014
(73) Patentinhaber: Siemens Mobility GmbH, 1210 Wien (AT)
(72) Erfinder: KIRALY, Andras, A-1220 Wien (AT)
(74) Vertreter: Deffner, Rolf
(86) Internationale Anmeldenummer: PCT/EP2012/071481
(87) Internationale Veröffentlichungsnummer: WO 2013/075914

(56) Entgegenhaltungen:
- EP-A2- 2 199 699
- DD-A1- 159 982
- DD-A1- 252 802
- DE-A1- 4 419 445
- DE-A1- 19 516 259
- DE-C1- 4 131 271

## Beschreibung

### Technisches Gebiet

Die Erfindung betrifft ein Passagierschienenfahrzeug, insbesondere einen Reisezugwagen.

### Stand der Technik

Passagierschienenfahrzeuge werden je nach Einsatzort mit Heizungen, Kühlungen oder kombinierten Heiz/Kühlanlagen ausgestattet, welche Innenraumtemperaturen herstellen sollen, die den Passagieren einen angenehmen Aufenthalt in dem Fahrzeug ermöglichen. Typischerweise werden Luftheizungen eingesetzt, wobei Außenluft angesaugt, erwärmt und die erwärmte Luft dem Passagierraum zugeführt wird. Weiters wird Luft aus dem Passagierraum abgesaugt und in das Freie geleitet. Diese Beheizung, bzw. Kühlung benötigt einen hohen Energieaufwand und hohe Heiz- bzw. Kühlleistung und daher große und schwere Heiz- und oder Kühlanlagen. Deshalb werden Passagierschienenfahrzeuge mit Wärmedämmungen ausgestattet, die den Energieaufwand für die Klimatisierung verringern. Gebräuchlich sind dabei Wärmedämmungen, welche zwischen der Außenhaut und der Innenverkleidung in den Wand und Deckenflächen angeordnet sind. Eine andere Lösung zeigt DE 195 16 259 A1. Gemäß dieser Lösung wird eine Außendämmung auf die Außenseite der Fahrzeughaut aufgebracht und mit einer stabilen Deckschicht versehen. Eine solche Lösung bedingt aber den Aufbau des Schienenfahrzeugs aus Hohlkammerstrangpreßprofilen, bietet jedoch die Möglichkeit, diese Hohlkammerstrangpreßprofile zur Führung von Zu- oder Abluft einzusetzen.

Ein weiterer Vorschlag zur wirtschaftlichen Nutzung der Abwärme ist DD 1599 82 A1 zu entnehmen, darin wird empfohlen, die Abluft über Kanäle im Dachbereich zu bestimmten Räumen des Schienenfahrzeugs zu leiten (Nebenräume, Sanitärräume, Einstiegsbereiche), wodurch deren Klimatisierung vereinfacht wird. Dabei ist nachteilig, dass diese Räume somit mit qualitativ schlechterer, verbrauchter Luft versorgt werden.

Der Schrift DD 2528 02 A1 ist ein aufwendiges Klimatisierungssystem zu entnehmen, welches ein Luftkanalsystem umfasst, durch welches aufbereitete (erwärmte oder gekühlte) Außenluft geleitet wird, sodass sich durch diese Maßnahme bereits ein angenehmes Raumklima ergibt und somit nur mehr geringe Luftmengen direkt dem Passagierraum zugeführt werden müssen. Dieses Luftkanalsystem bedingt jedoch eine sehr spezielle Konstruktion des Schienenfahrzeugs und eine Verringerung des Energieverbrauchs ist durch diese Anordnung nicht zu erwarten.

Ein weiterer Vorschlag zur wirtschaftlichen Nutzung der Abwärme ist aus der DE 44 19 445 A1 oder DE 41 31 271 C1 bekannt. Ein weiteres Problem bei der Klimatisierung von Schienenfahrzeugen ist die geringe Dicke der einsetzbaren Dämmungen, da dafür meist nur der Raum in der Wand- und Dach Spriegelkonstruktion zur Verfügung steht. Dadurch können sich in Extremfällen (beispielsweise Fahrten in arktischen Gebieten bei -30°C Oberflächentemperaturen an den Innenseiten der Innenverkleidungen einstellen, welche ein akzeptables Behaglichkeitsgefühl für die Passagiere verhindern. Da aus Kostengründen in Schienenfahrzeugbau keine extrem hochwertigen Dämmaterialien eingesetzt werden können, wie es beispielsweise im Flugzeugbau möglich ist, soll dieses Problem durch andere Maßnahmen gelöst werden.

### Darstellung der Erfindung

Der Erfindung liegt daher die Aufgabe zugrunde, ein Schienenfahrzeug mit aktiver Wärmedämmung anzugeben, welches eine hohe Energieeffizienz der Heiz- oder Kühlanlage aufweist und dabei nur einen geringen konstruktiven Aufwand erfordert.

Die Aufgabe wird durch ein Schienenfahrzeug mit aktiver Wärmedämmung mit den Merkmalen des Anspruchs 1 gelöst. Vorteilhafte Ausgestaltungen sind Gegenstand untergeordneter Ansprüche.

Dem Grundgedanken der Erfindung nach wird ein Schienenfahrzeug mit aktiver Wärmedämmung geschaffen, bei welchem die in der Abluft gespeicherte Wärmeenergie den Wärmeverlust des Passagierinnenraums durch die Außewand reduziert. Dabei wird die Abluft durch mindestens einen Wärmetauscher geleitet, welcher in einer Außenwand des Schienenfahrzeugs angeordnet ist. Dieser Wärmetauscher erhöht (im Heizbetrieb) die Oberflächentemperatur der betreffenden Innenwand des Passagierraums. Im Kühlbetrieb senkt der Wärmetauscher die Oberflächentemperatur der betreffenden Innenwand.

Der Heizbetrieb ist dadurch ausgezeichnet, dass Umgebungsluft erwärmt und dem Passagierinnenraum zugeführt wird, wobei die Innenraumtemperatur höher ist als die Außentemperatur. Der Kühlbetrieb ist dadurch ausgezeichnet, dass Umgebungsluft gekühlt und dem Passagierinnenraum zugeführt wird. Im Allgemeinen ist die Temperaturdifferenz zwischen Innenraum und Außentemperatur im Heizbetrieb höher als im Kühlbetrieb, beispielsweise ist auch bei einer Außentemperatur von -30 Grad eine Innentemperatur von +20 Grad zu erzielen. Dieser Temperaturunterschied ist größer als bei praktisch allen Temperaturdifferenzen im Kühlbetrieb, beispielsweise bei einer Außentemperatur von 40 Grad und einer Innentemperatur von 20 Grad. Deshalb eignet sich gegenständliche Erfindung besonders für Schienenfahrzeuge, welche überwiegend im Heizbetrieb klimatisiert werden, da solcherart die größtmögliche Energieeinsparung realisiert werden kann. Ebenso ist das Problem des mangelnden Komforts aufgrund zu niedriger Temperaturen der Schienenfahrzeugwände im Heizbetrieb markanter als im Kühlbetrieb.
Ein wesentlicher Vorteil der Erfindung ist, dass die gebräuchliche Bauart von Passagierschienenfahrzeugen aus sogenannten beplankten Spriegelwänden beibehalten werden kann und keine Sonderbauarten wie Leichtmetallhohlkammerprofile erforderlich sind. Somit kann ein erfindungsgemäßes, energiesparendes Schienenfahrzeug einfach und preisgünstig hergestellt werden, da bestehende Konstruktionen nur geringfügig geändert werden müssen.
Der Wärmetauscher wird als System von luftführenden Röhren ausgebildet, welche im Bauraum der Wärmedämmung in der Außenwand angeordnet sind. Dabei ist es zweckmäßig, ein System parallelgeschalteter Röhren einzusetzen. Diese Röhren können beliebige Querschnitte aufweisen, es ist jedoch ein geeigneter Wärmeübergang zu der Innenseitenbeplankung sicherzustellen. Beispielsweise kann der Wärmetauscher als Rohrsystem aus Faltenschläuchen (Aluflex-Schläuche) ausgebildet sein, da diese flexiblen Schläuche besonders einfach zu montieren sind und eine große wärmeabgebende Oberfläche aufweisen. Diese Röhren (Schläuche) sind so angeordnet, dass ein Wärmeübergang, insbesondere durch Wärmeleitung zwischen der Innenseite der Schienenfahrzeugwand (bzw. dem Dach) und der in diesen Röhren (Schläuchen) strömenden Abluft erfolgen kann. Solcherart wird die Oberflächentemperatur der Innenseite der Schienenfahrzeugwand (bzw. dem Dach) angehoben. Diese angehobene Oberflächentemperatur bewirkt einen reduzierten Wärmeübergang aus dem Passagierraum in die Schienenfahrzeugwand (bzw. dem Dach) und solcherart einen reduzierten Gesamtwärmeverlust. Die Wärmemenge, welche durch die Abluft aus dem Innenraum abgeführt wird, ist dabei gleich groß wie bei Fahrzeugen ohne erfindungsgemäße Wärmedämmung, da die abgeführten Luftmengen und die Lufttemperatur der abgeführten Luft in beiden Fällen identisch sind.

Typischerweise wird je Außenwand mindestens ein Wärmetauscher vorgesehen, wobei auch das Dach sich gut für den Einbau eines Wärmetauschers eignet.

Weiters ist es zur Steigerung des Komforts für die Passagiere vorteilhaft, mehrere Wärmetauscher je Seitenwand einzusetzen, da solcherart die Temperaturdifferenz zwischen dem Innenraum und der Fortluft nicht über die gesamte Fahrzeuglänge auftritt. Ein einzelner Wärmetauscher hätte im Bereich unmittelbar vor dem Fortluftgerät nur mehr einen geringen Wärmeeintrag in den Passagierraum, sodaß an diesen Stellen evtl. noch zu geringe Oberflächentemperaturen der Innenverkleidungen auftreten könnten. Das kann durch Einsatz von zwei Wärmetauschern, welche sich jeweils über die gesamte Fahrzeuglänge einer Seitenwand (oder des Dachs) erstrecken und welche gegenläufig von abzuführender Innraumluft durchströmt werden, verhindert werden. Dabei ist allerdings der Einsatz von je zwei Absaugungen und Fortluftgeräten erforderlich.

Erfindungsgemäß ist vorgesehen, die Abluft in dafür vorgesehenen Röhren (Schläuchen) zu leiten, welche nach Fertigstellung des Gerippes der Schienenfahrzugwand (bzw. des Daches) eingebaut werden. Dadurch kann der Konstruktionsaufwand für ein erfindungsgemäßes Fahrzeug reduziert werden, da bestehende Konstruktionen mit nur geringen Änderungen mit einer aktiven Wärmedämmung ausgerüstet werden können, Insbesondere entfällt die Neukonstruktion des Gesamten Fahrzeugs und die Entwicklung von aus Profilen aufgebauten Seitenwänden.
Gegenständliche Erfindung ist besonders für Schienenfahrzeuge in Differentialbauweise geeignet.

Dabei ist der Wärmetauscher in Form von Röhren, bzw. Schläuchen zu gestalten, welche in Zwischenräumen zwischen den Spanten und Spriegeln einer Schienenfahrzeugwand in Differentialbauweise angeordnet sind. Dieser Bauraum ist üblicherweise nur von Dämmstoffen gefüllt, woduch der Änderungsaufwand für die konstruktion eines erfindungsgemäßen Schienenfahrzeugs weiter reduziert wird.

### Kurzbeschreibung der Zeichnungen

Es zeigen beispielhaft:
**Fig.1** ein pneumatisches Ersatzschaltbild eines Passagierschienenfahrzeug mit aktiver Wärmedämmung.
**Fig.2** ein pneumatisches Ersatzschaltbild eines Passagierschienenfahrzeug mit aktiver Wärmedämmung, zwei Wärmetauscher je Seitenwand.
**Fig.3** ein pneumatisches Ersatzschaltbild eines Passagierschienenfahrzeug mit aktiver Wärmedämmung, zwei gegenläufig durchströmte Wärmetauscher je Seitenwand.
**Fig.4** den Temperaturverlauf in einer Schienenfahrzeugwand.
**Fig.5** den Wärmestromverlauf eines Schienenfahrzeugs.
**Fig.6** den Wärmestromverlauf eines Schienenfahrzeugs mit aktiver Dämmung.

### Ausführung der Erfindung

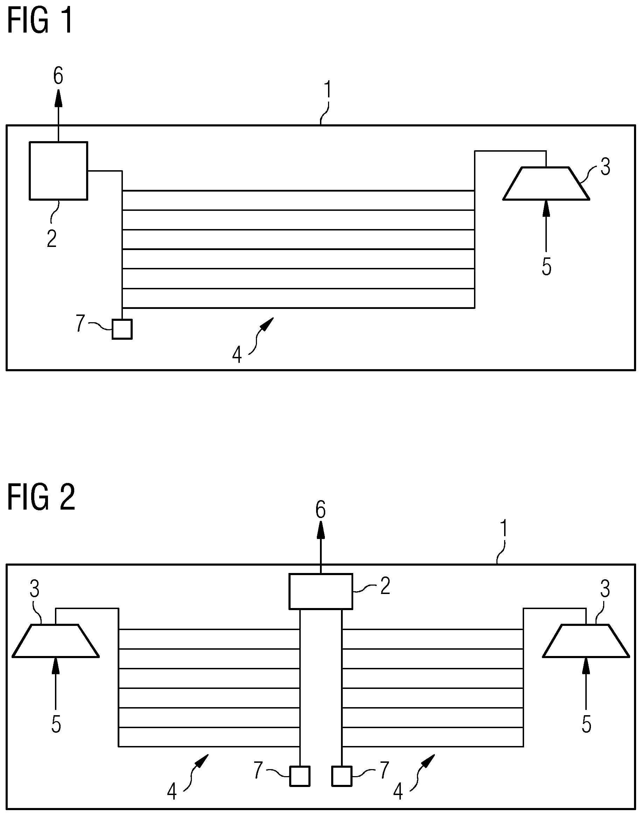

**Fig.1** zeigt beispielhaft und schematisch ein pneumatisches Ersatzschaltbild eines Passagierschienenfahrzeugs mit aktiver Wärmedämmung, beschrieben im Fall des Heizbetriebs. Ein Passagierschienenfahrzeug 1 umfasst ein Fortluftgerät 2, eine Absaugung 3 und einen Wärmetauscher 4. Die Absaugung 3 ist ausgebildet um Innenraumluft 5 einzuleiten, wobei ggf. ein Ventilator unterstützend vorgesehen sein kann. Die Absaugung 3 leitet die Innenraumluft in einen Wärmetauscher 4, welcher die Innenraumluft 5 an ein Fortluftgerät 2 leitet. Das Fortluftgerät führt die Innenraumluft in das Freie und gibt sie als Fortluft 6 an das Freie ab. Während des Durchgangs durch den Wärmetauscher 4 gibt die Innenraumluft 5 die in ihr enthaltene Wärmeenergie ab. Der Wärmetauscher ist als Röhrensystem ausgebildet, welches im Inneren mindestens einer Außenwand des Schienenfahrzeugs (typischerweise Seitenwand oder Dach) angeordnet ist. Es empfiehlt sich in jeder Seitenwand je einen Wärmetauscher 4 anzuordnen. Weiters ist eine Entwässerung 7 vorgesehen, welche das möglicherweise bei der Abkühlung der Fortluft entstehende Kondenswasser sammelt und abführt.

Der Wärmetauscher 4 gibt im Laufe des Verlaufs zwischen der Absaugung 3 und dem Fortluftgerät 2 die in der Innenraumluft 5 enthaltene Wärmeenergie ab, sodaß die Fortluft 6 eine geringere Temperatur als die Innenraumluft aufweist. Durch die räumliche Anordnung des Wärmetauschers 4 in den Seitenwänden, insbesondere der Nähe zu den Innenverkleidungen der Seitenwände, werden diese erwärmt und deren Oberflächentemperatur erhöht, wodurch sich für die Passagiere ein deutlich verbessertes Behaglichkeitsgefühl einstellt.
Im Kühlbetrieb stellt sich eine entsprechend umgekehrte Wirkung ein.

**Fig.2** zeigt beispielhaft und schematisch ein pneumatisches Ersatzschaltbild eines Passagierschienenfahrzeugs mit aktiver Wärmedämmung und mit zwei Wärmetauschern je Seitenwand. Es ist ein Ausführungsbeispiel dargestellt, bei welchem ein Fortluftgerät 2 mittig in Längsrichtung des Schienenfahrzeugs vorgesehen ist und an den Stirnseiten des Schienenfahrzeugs je eine Absaugung 3 vorgesehen und jeweils mit einem Wärmetauscher 4 an das Fortluftgerät angebunden ist. Dieses Ausführungsbeispiel ermöglicht eine gleichmäßigere Temperaturverteilung der Innenwandtemperatur und steigert somit den Komfort für die Passagiere.

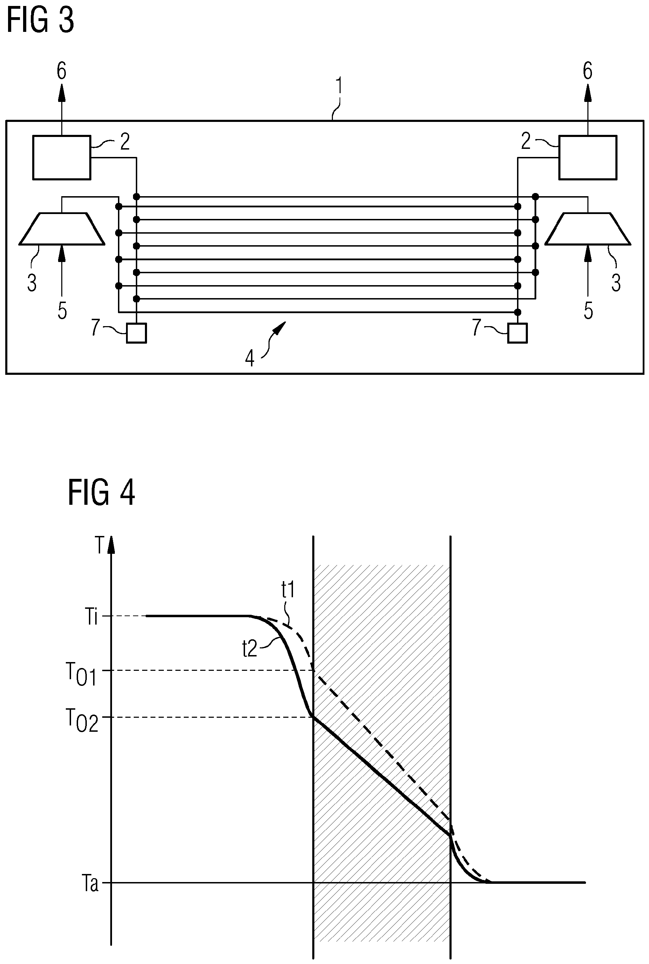

**Fig.3** zeigt beispielhaft und schematisch ein pneumatisches Ersatzschaltbild eines Passagierschienenfahrzeugs mit aktiver Wärmedämmung mit zwei gegenläufig durchströmten Wärmetauschern je Seitenwand. Es ist ein weiteres Ausführungsbeispiel dargestellt, bei welchem je ein Fortluftgerät 2 und je eine Absaugung 3 im Stirnbereich des Schienenfahrzeugs angeordnet sind, wobei zwei Wärmetauscher 4 vorgesehen sind, welche je eine Absaugung 3 mit einem zugehörigen Fortluftgerät 2 der gegenüberliegenden Stirnseite verbinden. Somit wird die Innenraumluft 5 an beiden Stirnseiten des Schienenfahrzeugs dem Passagierraum entnommen und an der jeweils gegenüberliegenden Seite als Fortluft 6 in das Freie geführt. Solcherart kann eine besonders hohe Gleichmäßigkeit der Temperaturverteilung der Innenwandtemperatur erzielt werden.

**Fig.4** zeigt beispielhaft und schematisch den Temperaturverlauf in einer Schienenfahrzeugwand. Es ist der Verlauf der Temperatur bei Heizbetrieb in einer Schnittdarstellung einer Schienenfahrzeugwand dargestellt. Zur Vereinfachung der Darstellung ist die Schienenfahrzeugwand mit homogenen Dämmungseigenschaften angenommen. Im Inneren der Fahrzeugs herrscht eine Innentemperatur Ti und in der Umgebung des Fahrzeugs eine Außentemperatur Ta. Die Innentemperatur Ti ist aufgrund der angenommenen Heizbetriebs höher als die Außentemperatur. Diese Temperaturdifferenz fällt zu einem Teil an der Schienenfahrzeugwand ab, zu einem weiteren Teil in der unmittelbaren Umgebung der Außen- bzw. Innenfläche der Schienenfahrzeugwand. Dadurch ist die Temperatur der Oberfläche der Schienenfahrzeugwand innenseitig geringer als die Innentemperatur Ti, außenseitig höher als die Außentemperatur. Diese Temperaturdifferenz stellt sich aufgrund des Wärmeflusses durch die Schienenfahrzeugwand ein, da bei fehlender Temperaturdifferenz zwischen Innenraum und Innenseite der Schienenfahrzeugwand kein Wärmestrom erfolgen würde. Dies würde einer optimalen Dämmung der Schienenfahrzeugwand entsprechen. Die genannte Temperaturdifferenz bestimmt wesentlich das Behaglichkeitsgefühl der Passagiere, da kalte Oberflächen in näherer Umgebung die Wärmeabgabe, auch direkt von den Passagieren an diese Oberflächen begünstigen. Mittels gegenständlicher Erfindung erfolgt eine Anhebung der Temperatur der Innenseite der Schienenfahrzeugwand, was einerseits das Behaglichkeitsgefühl der Passagiere steigert, andererseits für einen niedrigeren Gesamtwärmeverlust des Schienenfahrzeugs sorgt, das die Abluft, welche ohnedies aus dem Fahrzeug geleitet werden muß, die Oberflächentemperatur an der Innenseite der Schienenfahrzeugwand erhöht. Mittels gegenständlicher Erfindung steigert sich die zweite Oberflächentemperatur TO2 (bei einem Fahrzeug ohne aktive Dämmung) auf die erste Oberflächentemperatur TO1. Der Temperaturverlauf ohne aktive Dämmung t2 unterscheidet sich deutlich von dem Temperaturverlauf mit aktiver Dämmung t1.

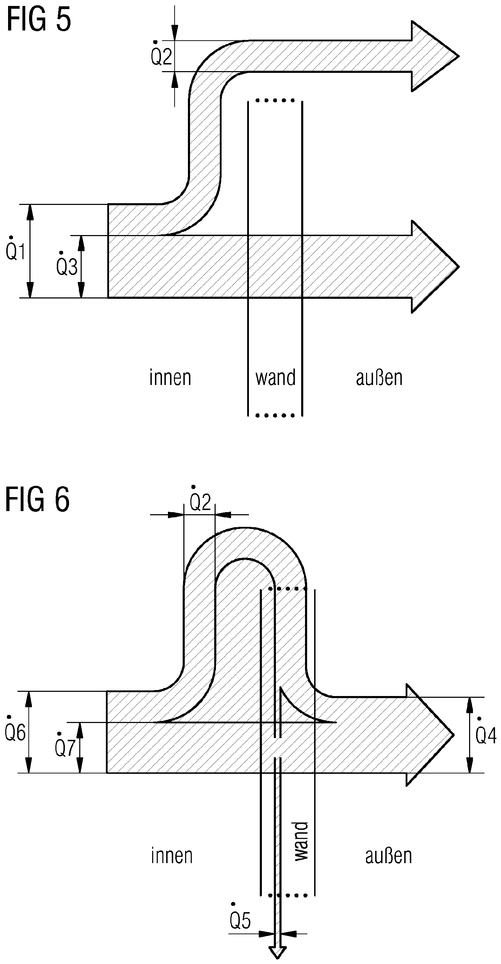

**Fig.5** zeigt beispielhaft und schematisch den Wärmestromverlauf eines Schienenfahrzeugs. Ein Wärmestrom *Q̇*₁, welcher dem gesamten Verlustwärmestrom eines Schienenfahrzeugs entspricht, teilt sich in einen Wärmestrom durch Abluft *Q̇*₂ und einen Wärmestrom durch die Wand *Q̇*₃ auf. Weitere Wärmeströme, wie durch Fenster, Eingangsbereiche, Wagenübergänge, etc. sind in dieser vereinfachten Darstellung nicht eingezeichnet. Es wird ausschließlich der Wärmeübergang durch die Schienenfahrzeugwand und die Entlüftung betrachtet bzw. dargestellt.

**Fig.6** zeigt beispielhaft und schematisch den Wärmestromverlauf eines Schienenfahrzeugs mit aktiver Dämmung. Ein Wärmestrom *Q̇*₆ teilt sich in einen Wärmestrom durch die Wand *Q̇*₇ und einen Wärmestrom durch Abluft *Q̇*₂ auf. Der Wärmestrom *Q̇*₂ ist gleich groß wie bei dem in Fig.5 gezeigten Beispiel ohne aktive Dämmung, da die abgeführten Luftmengen und die Lufttemperatur der abgeführten Luft in beiden Fällen identisch sind. Dieser Wärmestrom durch Abluft wird durch die Schienenfahrzeugwand geleitet und führt zu einer Erhöhung der Innentemperatur der Schienenfahrzeugwand, wodurch der vom Innenraum durch die Schienenfahrzeugwand führende Wärmestrom *Q̇*₇ sinkt. *Q̇*₇ ist kleiner als *Q̇*₃. Durch diese Erwärmung der gesamten Schienenfahrzeugwand erfolgt auch einer Erhöhung der Temperatur der Außenwand, was einen erhöhten Wärmestrom an die Umgebung *Q̇*₄ bedingt. *Q̇*₄ ist größer als *Q̇*₃. Die durch die Wärmetauscher geleitete Luft gibt einen Teil des Wärmestroms *Q̇*₂ an die Schienenfahrzeugwand ab, der restliche Wärmestrom *Q̇*₅ wird an die Umgebung abgegeben.

Da *Q̇*_{1 =} *Q̇*₂ + *Q̇*₃ und *Q̇*₆ = *Q̇*₂ + *Q̇*₇ => da *Q̇*₇ < *Q̇*₃, muss *Q̇*₆ < *Q̇*₁, dass heißt, dass aus dem Fahrgastraum insgesamt weniger Wärme abtransportiert wird. Daraus ergibt sich, dass im Heizungsfall weniger Energie erforderlich ist und sich somit eine Energieersparnis einstellt.

Durch die aktive Wärmedämmung ist die gesamte Wärmeabgabe des Innenraums *Q̇*₆ kleiner als der gesamte Wärmestrom *Q̇*₁ bei einem Schienenfahrzeug ohne aktive Dämmung.

### Liste der Bezeichnungen

- 1: Schienenfahrzeug
- 2: Fortluftgerät
- 3: Absaugung
- 4: Wärmetauscher
- 5: Innenraumluft
- 6: Fortluft
- 7: Entwässerung
- T: Temperatur
- Ti: Innentemperatur
- Ta: Außentemperatur
- T_{O1}: erste Oberflächentemperatur
- T_{O2}: zweite Oberflächentemperatur
- t1: Temperaturverlauf mit aktiver Dämmung
- t2: Temperaturverlauf ohne aktive Dämmung
- *Q̇*₁: Wärmestrom gesamt
- *Q̇*₂: Wärmestrom durch Abluft
- *Q̇*₃: Wärmestrom durch die Wand
- *Q̇*₄: Wärmestrom an die Umgebung
- *Q̇*₅: Wärmestrom durch Abluft
- *Q̇*₆: Wärmestrom gesamt bei aktiver Dämmung
- *Q̇*₇: Wärmestrom durch die Wand

## Patentansprüche

1. Passagierschienenfahrzeug (1) in Differentialbauweise mit aktiver Wärmedämmung, umfassend je mindestens einen Wärmetauscher (4), eine Absaugung (3) und ein Fortluftgerät (2), wobei die Absaugung (3) Innenraumluft (5) dem Passagierraum entnimmt und dem Wärmetauscher (4) zuführt und der Wärmetauscher (4) diese Innenraumluft (5) dem Fortluftgerät (2) zuführt und das Fortluftgerät (2) die Innenraumluft (5) als Fortluft (6) in das Freie leitet, wobei der Wärmetauscher (4) in einer Außenwand des Passagierschienenfahrzeugs (1) so angeordnet ist, dass eine Wärmeleitung zwischen der Innenseite der Außenwand und der in dem Wärmetauscher (4) strömenden Luft sichergestellt ist, **dadurch gekennzeichnet, dass** der Wärmetauscher (4) aus mit der Innenseite der Außenwand wärmeleitend verbundenen Röhren aufgebaut ist, und wobei diese Röhre in den Zwischenräumen zwischen Spanten und Spriegeln der Außenwand angeordnet sind.

2. Passagierschienenfahrzeug (1) mit aktiver Wärmedämmung gemäß Anspruch 1, **dadurch gekennzeichnet, dass** je Seitenwand des Schienenfahrzeugs ein Wärmetauscher (4) vorgesehen ist.

3. Passagierschienenfahrzeug (1) mit aktiver Wärmedämmung gemäß einem der Ansprüche 1 oder 2, **dadurch gekennzeichnet, dass** das Dach des Schienenfahrzeugs mit einem Wärmetauscher (4) ausgestattet ist.

4. Passagierschienenfahrzeug (1) mit aktiver Wärmedämmung gemäß einem der vorgehenden Ansprüche, **dadurch gekennzeichnet, dass** je Seitenwand zwei Wärmetauscher (4) vorgesehen sind, welche sich jeweils im Wesentlichen über die gesamte Fahrzeuglänge erstrecken und welche gegenläufig von der Innenraumluft (5) durchströmt werden.

## Claims

1. Passenger rail vehicle (1) using differential construction with active thermal insulation, comprising at least one each of a heat exchanger (4), an extraction system (3) and an exhaust air device (2), wherein the extraction system (3) removes interior air (5) from the passenger compartment and feeds it to the heat exchanger (4), and the heat exchanger (4) feeds said interior air (5) to the exhaust air device (2) and the exhaust air device (2) discharges the interior air (5) as exhaust air (6) into the atmosphere, wherein the heat exchanger (4) is arranged in an outer wall of the passenger rail vehicle (1) such that thermal conductivity between the interior of the outer wall and the air flowing in the heat exchanger (4) is ensured,
**characterised in that**
the heat exchanger (4) is constructed of pipes conductively connected to the interior of the outer wall, and wherein said pipes are arranged in the spaces between ribs and hoops of the outer wall.

2. Passenger rail vehicle (1) with active heat insulation according to claim 1, **characterised in that** a heat exchanger (4) is provided for each side wall of the rail vehicle.

3. Passenger rail vehicle (1) with active heat insulation according to one of claims 1 or 2, **characterised in that** the roof of the rail vehicle is fitted with a heat exchanger (4).

4. Passenger rail vehicle (1) with active heat insulation according to one of the preceding claims, **characterised in that** two heat exchangers (4) are provided for each side wall, which each extend substantially over the entire length of the vehicle and through which the interior air (5) flows in opposite directions.

## Revendications

1. Véhicule ferroviaire de passagers (1) selon un mode de construction différentiel avec une isolation thermique active, comprenant respectivement au moins un échangeur thermique (4), une aspiration (3) et un appareil à air vicié (2), dans lequel l'aspiration (3) extrait de l'air d'espace interne (5) de l'espace passagers et l'achemine vers l'échangeur thermique (4) et l'échangeur thermique (4) achemine cet air d'espace interne (5) vers l'appareil à air vicié (2) et l'appareil à air vicié (2) libère l'air d'espace interne (5) en tant qu'air vicié (6) dans l'atmosphère, dans lequel l'échangeur thermique (4) est disposé dans une paroi externe du véhicule ferroviaire de passagers (1) de sorte qu'une conduction thermique entre la face interne de la paroi externe et l'air circulant dans l'échangeur thermique (4) est assurée,
**caractérisé en ce que**
l'échangeur thermique (4) est construit à partir de tuyaux reliés par conduction thermique à la face interne de la paroi externe, et dans lequel ces tuyaux sont disposés dans les espaces intermédiaires entre des couples et des arceaux de la paroi externe.

2. Véhicule ferroviaire de passagers (1) avec une isolation thermique active selon la revendication 1, **caractérisé en ce que** pour chaque paroi latérale du véhicule ferroviaire un échangeur thermique (4) est prévu.

3. Véhicule ferroviaire de passagers (1) avec une isolation thermique active selon l'une des revendications 1 ou 2, **caractérisé en ce que** le toit du véhicule ferroviaire est équipé d'un échangeur thermique (4).

4. Véhicule ferroviaire de passagers (1) avec une isolation thermique active selon l'une des revendications précédentes, **caractérisé en ce que** pour chaque paroi latérale deux échangeurs thermiques (4) sont prévus, qui s'étendent respectivement pour l'essentiel sur la totalité de la longueur du véhicule et qui sont traversés dans le sens opposé par l'air d'espace interne (5).
